# EUROPEAN PATENT SPECIFICATION

(11) **EP 2 477 747 B1**
(45) Date of publication and mention of the grant of the patent: **20.03.2019**
(21) Application number: 10755085.7
(22) Date of filing: 14.09.2010
(51) Int. Cl.: B03B 1/04, C05F 17/02

(54) **ENZYMATIC TREATMENT OF HOUSEHOLD WASTE**
ENZYMATISCHE BEHANDLUNG VON HAUSMÜLL
TRAITEMENT ENZYMATIQUE DE DÉCHETS MÉNAGERS

(30) Priority: 15.09.2009 DK 200901027
(43) Date of publication of application: 25.07.2012
(73) Proprietor: Renescience A/S, 7000 Fredericia (DK)
(72) Inventor: SCHMIDT, Erik, Ravn, 6500 Vojens (DK); NØRHOLM, Nanna, Dreyer, DK-7000 Fredericia (DK); RØNSCH, Georg, Ømskov, DK-7000 Fredericia (DK); ZUBCEVIC, Adis, DK-7000 Fredericia (DK)
(74) Representative: IP-Safe ApS
(86) International application number: PCT/DK2010/000125
(87) International publication number: WO 2011/032557

(56) References cited:
- WO-A1-86/05171
- DE-A1- 19 946 299
- FR-A- 2 494 715
- US-A- 5 300 438
- US-A1- 2004 262 220
- US-A1- 2008 213 849

## Description

The invention relates to a plant for treating household, agricultural or industrial waste having a high content of dry matter and having a certain content of organic material.

### Background

Recently, there has been a growing interest to employ methods in which the energy stored within organic material is utilized to the fullest. Agricultural material/waste, household waste and municipal waste are examples of sources containing a high content of dry matter and a certain content of organic material, where it is of high interest to utilize the stored energy within the organic material in stead of just disposing the material/waste.

Today, the methods for treatment and subsequent disposal of waste such as household, agricultural or municipal waste include among others incineration, landfill, burning, dumping and composting, where the method choice often depends on e.g. the content of organic material compared to the content of non-organic material. However, these methods do not directly provide an optimum utilization of the energy stored within the organic material.

Incineration is one method which combines utilization of the energy stored within the organic material with disposal of waste such as household, agricultural or municipal waste. For example in Denmark, the heat generated by the incineration process is mainly used for district heating, but can also be converted into electricity. Incineration is however problematic if the material/waste to be incinerated includes non-organic parts like plastic, glass and metals as these upon incineration gives rise to pollution in the form of e.g. NOₓ, SOₓ, and dioxin released into the atmosphere. In addition, slag and fly ash is left as a side product. These side products can be disposed by dumping, but as the slag can contain high amounts of heavy metals, this entail a high risk of pollution if the dumping area is not adequately sealed of from contact with the surrounding soil, thereby allowing the heavy metals to be washed into the soil and migrate down to the groundwater. Consequently, in order to optimally utilize the energy stored within organic material found in different types of material/waste by incineration without generating pollution, pre-sorting is required.

One way of doing this, is to have the consumers sort their household waste into different chambers specifically for organic waste, glass, metal, plastic, paper and such or as an alternative have larger manually managed separation stations, e.g. implemented at the municipal incineration plant. With the latter, a professional team can sort the waste more efficiently than the consumers. However, chances still are that smaller pieces of metal or glass are not separated from the organic waste. Working with separation of household waste further subjects the workers to sharp pieces of broken glass and metal, chemicals from e.g. batteries, a high level of bacteria as the waste can easily be more than a week old, and needles, which posses a high risk health wise. The waste separation process is thus unhealthy for the workers employed at the station on top of being time consuming, inefficient and expensive.

An alternative waste sorting method, which solves the above described problems, is to liquefy the organic contents while maintaining the non-organic contents in their solid phase, and afterwards separate the solid and the liquid phases. The problem with pollution when e.g. incinerating the separated waste is thereby greatly diminished.

Liquefying of organic waste further provides a maximum utilization of the energy stored within it, which means that the liquefying process is highly advantages not only in sorting of waste, but also in treating and subsequently utilizing the energy stored within organic material/waste such as e.g. agricultural material/waste in general.

Liquefying the organic contents can be obtained in different ways depending on the organic content. Enzymatic treatment of the organic waste is one preferred method. Depending on the composition of the organic waste, different types of enzymes, temperature conditions and pH values are necessary in order to disintegrate all of the organic waste. In some situations pre-treatment of the waste is needed for softening up the material before the enzymatic treatment of the waste. The pre-treatment can consist of heating up the material usually to close to 100°C, subjecting it to chemicals, and/or mechanical means of shredding or tearing.

WO 82/01483 discloses a free fall drum mixer used for separating the organic waste from the non-organic waste, in which the inner drum has perforations on the inside. The waste is subjected to heat and/or pressure, which causes the organic material to soften up. By sudden release of the pressure, the softened organic material is pressed out through the perforations, whereas the non-organic material stays inside the inner drum. The organic waste can afterwards be further disintegrated by enzymatic hydrolysis possibly followed by fermentation into bio-ethanol in a new set of vessels. The apparatus is directed to a batch wise treatment of the material.

WO 2006/056838 A1 discloses free fall mixers constituting either a conventional rotary cement mixer or a drum mixer. In one embodiment, the drum is separated into five chambers having a rotating shaft with three paddlers in each chamber. The organic material may need pre-treatment by different means prior to the enzymatic hydrolysis. In this invention, the pre-treatment would normally occur before the waste is placed inside the free fall drum. This apparatus is also directed to batch wise treatment of the organic material.

WO 2007/036798 discloses a one-chamber free fall drum mixer employing three paddles. This drum is used both for pre-treatment of the organic material, enzymatic hydrolysis and in some cases also for a subsequent fermentation of the organic slurry converting it into e.g. bio-ethanol. The drum has an inner vessel preferentially with perforations likes the drum described in WO 82/01483. This enables the organic material the sieve out of the inner drum when it has been liquefied, thus separating the organic waste fractions from the non-organic and still solid waste fractions.

The paddlers described in WO 2006/056838 and WO 2007/036798 insure that the waste is thoroughly mixed by lifting the waste upwards to a position from where it will drop down again as the drum rotates around its horizontal axis. The paddlers are mounted onto a rotating shaft situated in the centre of the drum. This is however problematic when the waste contains larger continuous pieces of material e.g. clothing, ropes or cables, as these will easily get stuck around the rotating shaft. In addition, removal of these objects is a time consuming and problematic process, in particular if the objects are highly entangled around the rotary shaft.

Further, since the enzymes used for the enzymatic hydrolysis are not found in the centre of the drum, but at the perimeter of it (primarily in the bottom of the drum), having an internal rotary shaft e.g. with paddlers as described above is problematic when parts of the material to be treated - regardless of whether the material is organic or not - are stuck around the rotary shaft. Organic material would as a result not be subjected to the enzymatic hydrolysis

In addition, any material caught around a rotating shaft might damage the apparatus or reduce the efficiency of the apparatus.

A further problem is to define the retention time of the material to be treated in a continuously working free fall drum corresponding to the previously described drums. New means for mixing the waste within a free fall drum or the likes is therefore required.

### Object and description of the invention

The object of the present invention is to solve the above-mentioned problems.

According to one aspect the present invention relates to a chamber defined in the appended claims, for continuously enzymatic treatment of material having a certain content of organic materialprovided with means for continuously transporting the material and for rotating the chamber along its substantially horizontal axis, wherein said chamber has an inlet for the continuous flow of material to be treated and an outlet for the continuous flow of treated material at opposite ends of the horizontal axis of the chamber. The means for transporting the material from the inlet to the outlet comprises one or more upright walls attached to the inside of said chamber which one or more walls forms a spiral extending throughout the horizontal length of the chamber, so that the upright walls continuously moves said material in a horizontal direction upon rotating the cylinder. The spiral can comprise one continuous upright wall extending throughout the horizontal length of the chamber or the spiral can comprise more than one part of upright wall which parts together extend throughout the length of the chamber. If the upright wall comprise several parts, the parts might be placed in immediate continuation of each other i.e. there are no significant gap between the parts, or the parts can be placed with a gap between them, this gap can comprise an opening between to two parts placed in continuation of each other or it can be a gap between two parts placed beside each other in the longitudinal direction of the chamber.

One advantage with the upright walls forming a spiral extending through the length of the chamber is that e.g. longer objects found in the material to be treated do not easily get stuck inside the chamber, which provides a very robust operation of the apparatus.

Another advantage is that the sections formed by the upright walls ensure that the waste and reactive components such as enzymes are confined within the same area, whereby the components can interact with the entire portion of the waste.

According to one embodiment of the chamber the one or more upright walls at least at one given rotation angle forms separated sections (s₁-sₓ) along the lowest part of the inside of the chamber i.e. this means that the material is divided into portions which portions are positioned along the bottom of the chamber where the material is held by gravity. Each individual section is defined by the adjacent upright walls having a height hₓ and the inner surface of the chamber. For a given chamber, the volume of each section can be fixed by determining the distance between the adjacent upright walls and the height of the upright walls. At least at one given rotation angle material within the chamber, the material under treatment can move from one section to a successive section in the direction of movement i.e. the direction from inlet to outlet.

According to one embodiment of the chamber the one or more upright walls at all rotation angles form separated sections (s₁-sₓ) along the lowest part of the inside of the chamber.

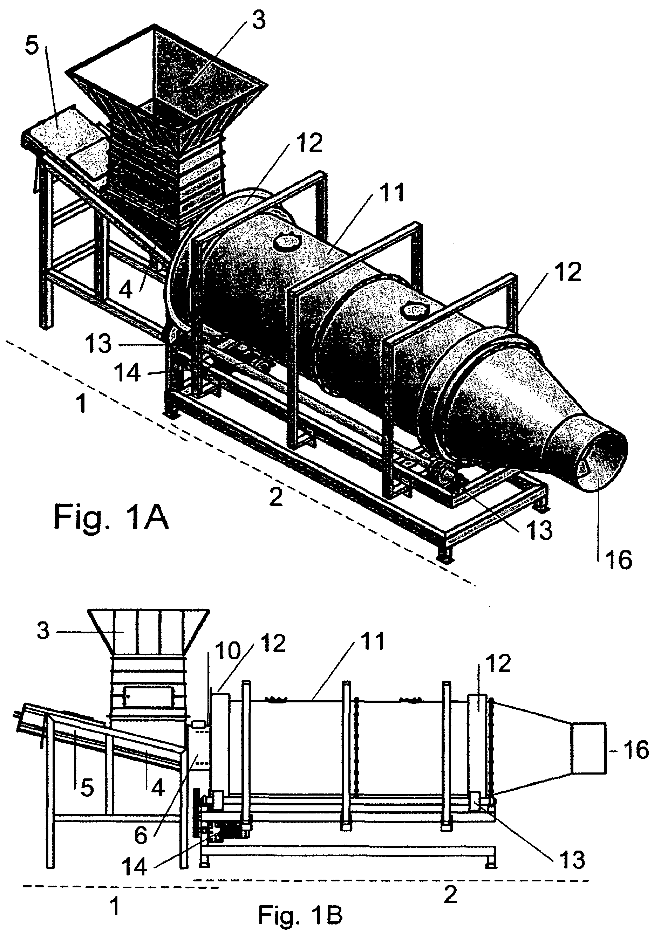

According to one embodiment of the chamber the upright walls are placed in an angel 40° < α < 90° relative to the direction of movement of the treated material. Preferably the angle is 45° < α < 75°. The direction of movement represents α=0° and is a fictitious or overall direction which is defined as a line reaching from the inlet to the outlet of the chamber, the material will during the treatment move in many directions. According to the embodiment of the invention shown in fig. 1A-1E the direction of movement can be defined by the central axis of the chamber.

According to one embodiment of the chamber the inner surface of the chamber can be inclined downwards in the direction of movement i.e. from the inlet to the outlet.

According to one embodiment of the chamber the chamber comprises means for controlling the inclination of the inner surface of the chamber in the direction of movement. These means for controlling the inclination can normally tip the whole chamber and this way change the inclination of the inner surface of chamber. The means for controlling the inclination of the inner surface of the chamber can change the inclination either upwards or downwards thereby either reducing or increasing the flow of material through the chamber. Normally, it will be possible to vary the inclination between -30° to 30 °, but often the inclination will be varied between -5 ° to 5 °.

According to one embodiment of the chamber a stirring piece is fastened between two successive parts of the upright walls either to the inner surface of the chamber or to the upright walls.

According to one embodiment of the chamber one or more of the stirring pieces of the chamber is profiled as a Y or a V where the lower edge is in contact with or turned towards the inner surface of the chamber. Normally the stirring piece comprises an elongated piece having the length I e.g. made of metal, and having a transverse profile corresponding to a Y or a V where the lower edge of the profile is attached e.g. directly to the inner surface of the chamber in a direction parallel to the direction of movement or in a direction deviating less than 30° from the direction of movement.

According to one embodiment of the chamber the rotating means are provided outside the chamber i.e. there are only stationary parts inside the chamber and the material to be treated is not in contact with the rotating means.

According to one embodiment of the chamber the rotating means can provide rotation of the chamber in two directions i.e. both clockwise and counter clockwise. The possibility of turning the chamber in two directions together with the definition of separated sections inside the chamber makes it possible to control the retention time in each section.

According to one embodiment of the chamber the chamber is provided with means for heating of the chamber e.g. combined with means for maintaining the temperature inside the chamber. Means for maintaining the temperature inside the chamber comprises e.g. means for insulating.

According to one embodiment of the chamber the chamber is provided with means for cooling of the chamber such as irrigation of part of the chamber or placing of part of the outer surface of the chamber in a water bath and e.g. an outlet for removing heated air from the chamber.

According to one embodiment of the chamber the chamber is provided with means for controlling the retention time in form of a control system controlling speed and direction of the rotation.

According to one embodiment of the chamber the chamber is provided with means for adding reaction medium such as steam or water or acid or base or reactants such as enzymes to the material to be treated. A reaction medium might or might not react with the material to be treated, but primarily the reaction media creates an environment which makes it possible for desired reactions to take place.

According to one embodiment of the chamber the chamber further can be used for pre-treatment, heat treatment or cooling of the material to be treated . before enzymatic treatment of the material.

According to one embodiment of the chamber a feeding device comprises means providing compaction of material fed to the chamber before the material enters the chamber. This compaction of material provides the escape of gasses from the chamber back through the feeding device. The compaction can e.g. be performed by a device comprising a piston or by a device comprising a transport worm.

According to one tested embodiment the means comprises a pushing device comprising a piston which can be moved backwards and forwards while pushing material which has fallen down or has been pressed down to the bottom of the hopper out of the transport room (4) and into an entrance part where the material forms a plug.

According to a second aspect of the invention the invention also relates to a method defined in the appended claims, for treating material having a certain content of organic material in an enzymatic reaction chamber according to any of the apparatus claims, said method comprises;
- continuously feeding the material to said chamber;
- continuously adding enzymes to said chamber for an enzymatic treatment of said material in said chamber, resulting in a continuously flow of treated material from the outlet of said chamber.

According to one embodiment of this method the material can be subjected to further treatments such as:
a) heating, b) cooling, c) pre-treatment.

According to one embodiment of this method the reaction chamber during the enzymatic treatment of material is subjected to one or more rotation sequences comprising the following steps:
a) a first sequence of either clockwise or counter clockwise rotation lasting between 15 seconds - 5 minutes,
b) a second sequence of alternating of clockwise and counter clockwise rotation lasting between 0 sec. - 5 min. where each sequence last between 0 min - 10 hours.

The first and second sequences are repeated until the desired retention time has been reached. The material inside the chamber is transported forward from the inlet to the outlet of the chamber during the first sequence while the second sequence provides extra retention time under stirring. If the chamber is large enough to provide the necessary retention time during passing, the treatment will only comprise a series of first sequences where the total retention time is obtained by repeating the first sequence until the material exits the chamber through the outlet. The rotation frequency of the clockwise and counter clockwise rotation of the first and second sequence defines how intensely the material is stirred. A treatment in the enzymatic reaction chamber starts and ends with a first sequence a) as material is transported forward inside the chamber during the first sequence.

According to one embodiment of this method the material to be treated is sorted or unsorted household waste or other waste containing more than one reusable fraction.

According to a third aspect of the invention, the invention also concerns a method defined in the appended claims, for separation of municipal solid waste comprising in a continuous or semicontinuous way the actions of
1) introducing a predetermined and preferably pretreated amount of sorted or unsorted municipal solid waste into a tubular horizontal rotating enzymatic reaction chamber,
2) adding to said amount of municipal solid waste a predetermined amount of enzymes and possible an amount of water or other liquid at at least one point close to the inlet end of the reaction chamber,
3) transporting and mixing while basically, in a plug flow like manner, keeping said predetermined amounts of enzymes and municipal solid waste together in sections of said horizontal tubular reaction chamber by help of helical walls arranged on the inside of the rotating horizontal enzymatic reaction chamber
4) possible keeping the temperature and/or pH value within the chamber/sections at predetermined levels in order to ensure optimal enzymatic hydrolyses of the biodegradable part of the municipal solid waste,
5) separating the hydrolyzed slurry from the solid parts of the municipal solid waste by help of sieves and/or washing arrangements,
6) transporting/pumping the slurry of the municipal solid waste for further processing or storing,
7) transporting said solid parts to further processing steps as washing, sorting and/or drying,
8) preparing the solid parts for storing/depositing and/or being used for recycling and/or fuel products.

A special advantage this is that it provides an efficient method for separating large amounts of municipal solid waste into liquefied parts and into solid parts in a continuous or semi continuous process. Experiments have confirmed that the liquefied and solid parts are easy to separate after the enzymatic process and that the solid parts are suitable for further processing in a continuous or semi continuous process flow. This makes the invention interesting with respect to handling of large amounts of continuously or semi-continuously of incoming municipal solid waste. Especially when comparing to batch wise enzymatic treatment of waste material the above method is more efficient.

According to a fourth aspect of the invention the invention also relates to a plant defined in the appended claims, for enzymatic treatment of material having a certain content of organic material comprising
a) a first chamber (7) for heating and/or mechanical treatment of the material;
b) a second chamber (8) for cooling of the material after step a);
c) a third chamber (11) which is constructed according to any of the claims for a chamber for treatment of partly organic and partly inorganic material.

According to one embodiment of this plant all three chambers i.e. also the first and the second chambers, are constructed according to any of the claims for a chamber for treatment of partly organic and partly inorganic material.

According to one embodiment the material is transferred continuously from step a) to step b) to step c) i.e. the process is not stopped and the process is not a batch process, where after the material is transferred from one step to the next, instead the material continuously enters and leaves each step.

### Brief description of the drawings

Figures 1A-1E discloses an embodiment of a reaction chamber according to the invention.
Figures 2A-2B discloses a second embodiment of a reaction chamber according to the invention.
Figures 3A-3B discloses a stirring piece which can be used in a reaction chamber according to the invention.
Figure 4 shows a plant comprising an enzymatic reaction chamber including pre-treatment and cooling chamber according to the invention.

### Description of preferred embodiments

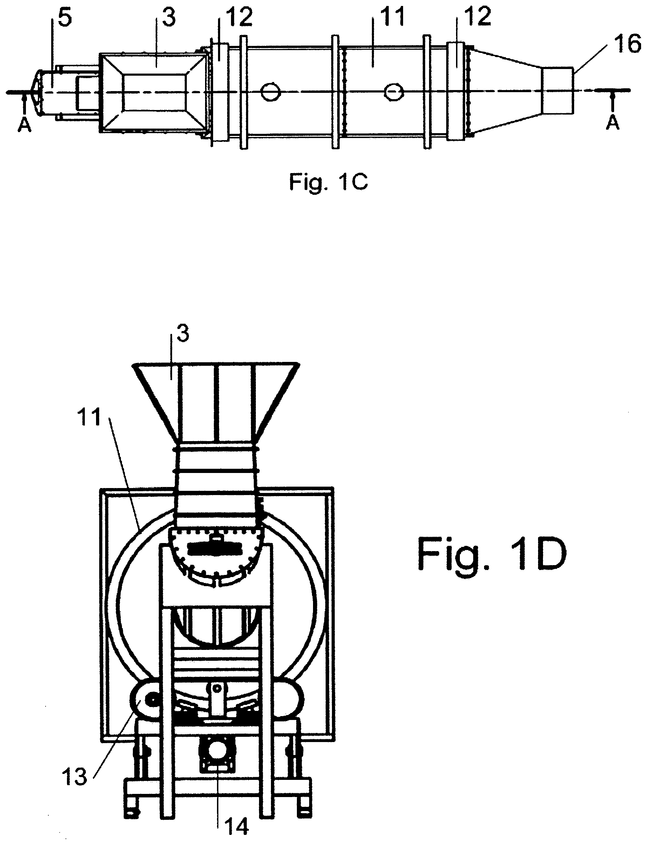

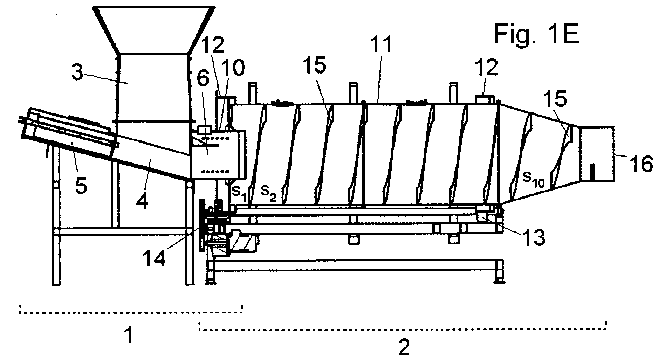

Fig. 1A shows a 3-dimensional view of an embodiment of an apparatus comprising a chamber for treatment of partly organic and partly inorganic material according to the invention, fig. 1B shows a side view of the same embodiment, fig. 1C shows a top view of the embodiment, fig. 1D shows a view from the inlet end of the embodiment and fig. 1E shows a cut through the embodiment which cut is made at the line A-A in fig. 1C.

The apparatus illustrated in fig. 1A to 1E comprises a feeding device 1 and a chamber for treatment 2. This chamber for treatment can be used for different aspects of treatment such as e.g. physical/mechanical or chemical disintegration, heating or cooling or enzymatic treatment. The retention time in the chamber is determined by the length of the chamber, the speed and direction of rotation of the chamber and the inclination of the chamber i.e. the angle with which the lower inner surface of the chamber deviates from horizontal in the direction from inlet to outlet.

The feeding device 1 is placed in contact with an inlet 10 to the chamber for treatment 2. The inlet 10 according to the embodiment comprises an opening at the inlet end of the chamber for treatment 2 and material to be treated is continuously or batchwise added to the feeding device 1. According to the shown embodiment the feeding device 1 comprises a hopper 3 that can receive material, and at the bottom of the hopper 3 is provided a transport room 4 which room 4 is swept by a pushing device 5. The hopper 3 is formed as a pipe having a square cross-section but might as well be formed as a cylindrical pipe or such. The pushing device 5 comprises a piston which can be moved backwards and forwards while pushing material which has fallen down or has been pressed down to the bottom of the hopper 3 out of the transport room 4 and into an entrance part 6. The piston can be formed as a crescent moon in order to provide increased compaction of the material during the forward movement, and can e.g. be covered by a coating of plastic such as Teflon or the like in order to ensure that the piston slides easily in relation to the adjacent walls of the transport room 4 or to ensure that the piston is not chemically attacked by substances in the material to be treated.

The entrance part 6 is formed as a cylindrical pipe but might also be formed with a reduced cross-sectional area along the direction of movement in order to further compress and/or compact the material to be treated when it passes through the entrance part 6. Normally, a plug of material is formed in the entrance part 6 and such a plug prevents gasses from exciting from the chamber for treatment 2 to the surroundings through the hopper 3. The entrance part 6 might also comprise one or more inlets for steam, water and/or chemicals.

Generally, the chamber 11 is constructed to treat non-uniform and/or un-specified material having a certain content of organic matter. "Non-uniform" means that the material can contain both solid and liquid material, and that the material can contain either both organic and non-organic matter, or several types of organic matter e.g. combined with one or more types of inorganic material.

Non-organic matter includes metals, glass, plastic and such, and is in general not widely affected by enzymatic treatment and/or heat treatment at temperatures below 200°C. The non-organic matter will therefore retain its configuration, thus remain in the solid phase, throughout the treatment methods according to the present invention.

Organic matter comprises plant and animal remains among others starch, cellulose, hemi cellulose, lignin, proteins and fat. Characteristic of the organic matter is that it can be liquefied by enzymatic hydrolysis using suitable enzymes, temperature conditions and/or pH values reflecting the structure, which the enzymes are to decompose.

Such material comprises household waste, agricultural material/waste, industrial waste, municipal waste or their likes. The only requirement to the material to be treated is that the individual pieces of solid parts in the material should be small enough to pass through the inlet 10. In order to fulfil this requirement it can be necessary to adapt a different feeding device and/or increase the dimensions of the inlet 10 if the material to be treated contains particularly huge or in other ways difficult parts. Either raw and/or pre-treated feed can enter the enzymatic reaction chamber 2, pre-treated feed is e.g. material which has been treated with acid and/or heat and/or been diminished and/or subjected to mechanical softening.

The chamber for treatment 2 comprises a chamber 11 which chamber 11 comprises the inlet 10 placed at the inlet end of the chamber 11. The inlet 10 is in at least fluid-tight contact with the feeding device 1, and preferably also in gas-tight contact with the feeding device 1. Whether the contact between the feeding device and the inlet 10 should be gas tight depend on the material to be treated and the environment in which the chamber for treatment is placed. The chamber 11 can be rotated during treatment of the material and normally the chamber 11 can be rotated both clockwise and counter clockwise. Start, stop and direction for rotating, i.e. the periods where the chamber 11 is respectively rotated clockwise and counter clockwise, can be controlled either manually or automatically by a controller device. In a specific chamber 11 the rotation speed and direction is used to define the retention time for the material to be treated inside the continuously working chamber 11.

The chamber 11 is provided with driving means for rotating the chamber 11 and normally all parts of the driving means are placed outside the chamber 11. This means that the chamber 11 does not have a central axis or other moving parts inside the chamber 11 which might be affected by the material in the chamber. The chamber 11 normally has only stationary parts inside the drum i.e. the parts do not move relative to the drum. The driving means according to the shown embodiment comprises two contact surfaces 12 placed in connection to the outer surface of the chamber 11, and the contact surfaces 12 correspond to two driving wheels 13. The driving wheels 13 are via a gear arrangement 14 connected to a motor and the speed and direction of rotation of the chamber 11 can be controlled by the motor and the gear arrangement.

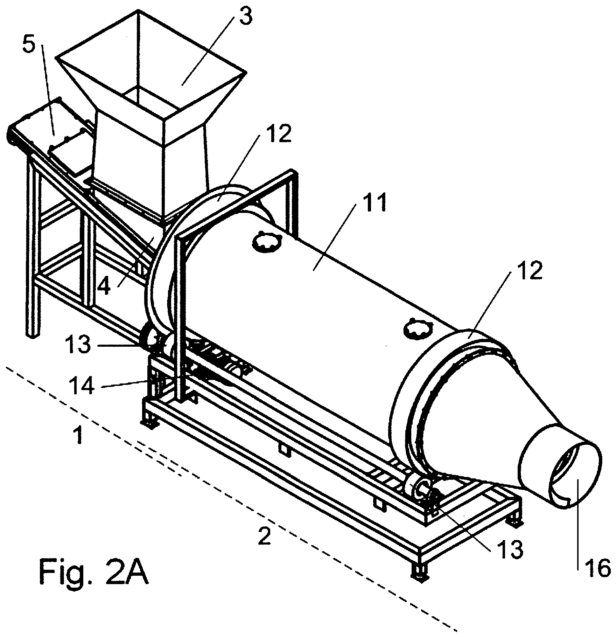

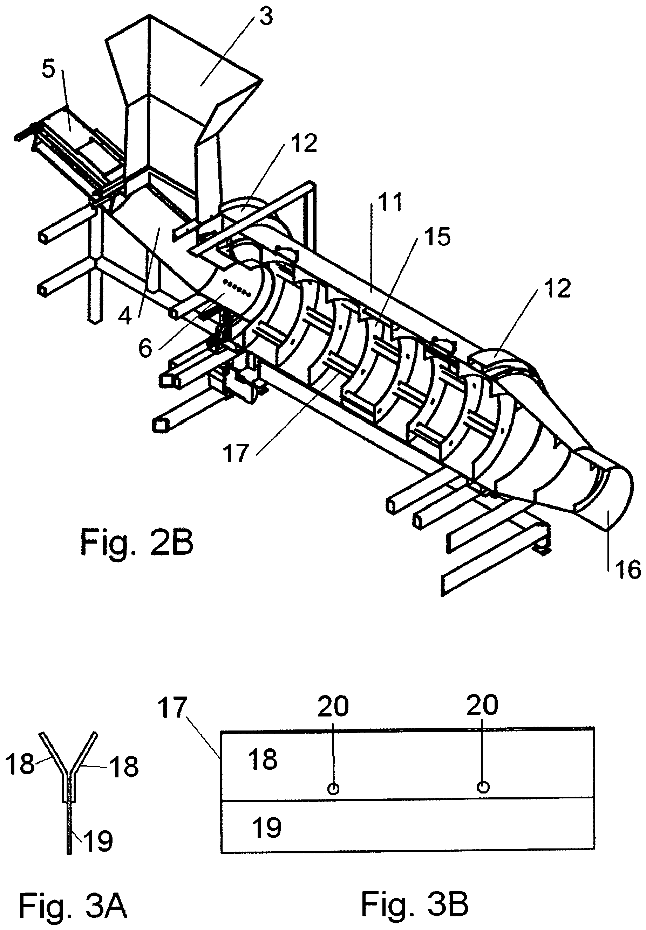

The inner surface of the chamber 11 according to the embodiments shown in fig. 1 and 2 is in the shape of a cylindrical pipe but might as well be formed as a polygonal pipe, which might improve the efficiency by which the waste and the enzymes are mixed.

On the inner surface, the chamber 11 is provided with upright walls 15. An upright wall is a piece of material or a part of the inner surface shaped so that it is protruding from the inner surface of the chamber, the upright wall protrudes in a perpendicular angle relative to the immediately surrounding inner surface.

The one or more upright walls 15 attached to the inner surface of said chamber forms a spiral extending throughout the horizontal length of the chamber. This means that the upright walls 15 move the material to be treated in a horizontal direction upon rotation of the cylinder.

The upright walls 15 can have the form of a continuous spiral where one wall extends through the length of the chamber 11. Alternatively, the upright walls 15 might be formed by several pieces, where the start of the following wall are fastened at another position than the end of the previous wall thereby forming a broken spiral extending through the length of the chamber. The upright walls 15 are preferably placed in an angel 45° < α < 90° relative to the direction of movement of the treated material, placement of the upright walls 15 in this angle relative to the direction of movement causes the material inside the chamber 11 to be pushed forward by the upright walls when the chamber 11 rotates.

The upright walls 15 form a series s₁-s₁₁ of separated sections along the bottom of the chamber 11 at any given rotation angle. Each section sₓ can provide a separate volume, and when fluid material enters a given section it is possible to define the retention time for the material in that section. It is possible to keep the material in a given section either by stopping rotation of the chamber 11 or by rotating the chamber 11 in alternating direction i.e. in turns clockwise and counter clockwise in short intervals. Short intervals will normally be of less than 30 secs but the optimal interval will depend on the size e.g. the diameter of the chamber 11 and the material to be treated. The material to be treated is transferred from one section to a following section when the chamber 11 is rotated sufficiently. If the sections sₓ are defined by a continuous spiral, the sections sₓ will not show as a distinguishable zone, the section sₓ will be defined by being the lowest part of the chamber 11 at a given time.

According to the illustrated embodiment of the invention defined in the appended claims, eleven sections are formed, but depending on the length of the chamber 11 and the distance between two successive upright walls 15, fewer or more sections might be formed. The width of each section sₓ, where x = 1,2,...,11 in the present illustration, is generally defined by the inner surface of the chamber 11 which inner surface could have any shape e.g. polygonal, round, oval or the like. According to the illustrated embodiment the width of each section sₓ is defined by the rounded inner surface of the cylindrical chamber 11 i.e. the profile of the inner surface consist of a part of a circle arc. The length of each section sₓ is both generally and according to the specific embodiment defined by the distance between two successive upright walls 15. The height h of each section sₓ is defined by the height of the adjacent upright walls 15 which walls are lower than the radius inside the chamber 11, and by the form of the inner surface of the chamber 11, i.e. the height varies or at least can vary over the volume of each section. The height h defines the maximum content of a fluid fraction of the material to be treated when the fluid fraction has to be kept in separate sections.

The size of each section depends on the desired capacity of the chamber and the size of each section may vary through the length of the chamber 11.

One advantage with the upright walls 15 forming a continuous spiral extending through the length of the chamber 11, is that e.g. longer objects found in the material to be treated do not easily get stuck inside the chamber, this provides a very robust operation of the apparatus.

Another advantage is that the sections sₙ formed by the upright walls 15 ensure that the waste and reactive components such as enzymes are confined within the same area, whereby the components can interact with the entire portion of the waste.

The chamber 11 is also provided with an outlet opening 16 placed opposite the inlet 10, i.e. the material to be treated moves from one end of the chamber 11 to a second or opposite end of the chamber 11 in the direction of movement.

According to the embodiment of fig. 1A-1E the outlet opening 16 is placed after an outlet portion having a continuously reduced cross-section in the longitudinal direction i.e. in this case a conical portion. The outlet portion might alternatively have the same or a larger cross-section than the cross-section of the chamber 11, where the latter might facilitate an easier unloading of the treated material.

Normally both the feeding device 1 and the chamber 11 will be placed on each their loading cell (not shown in the figures). Weighing of the material to be treated both in the feeding device 1 and in the chamber 11 will allow the user of the apparatus to control the amount of material entering the chamber 11 and the amount of material being removed from the chamber 11. Further, the user can control and optimize the addition of reactive components or fluidizers such as enzymes, water, steam or the like which components also are fed into the chamber 11.

Fig. 2 shows a second embodiment of a chamber 11 according to the invention. This second embodiment is provided with one or more stirring pieces 17 placed between the upright walls 15 inside the chamber 11. By lifting up the material from the bottom of the chamber 11 and dropping it again, the stirring piece(s) 17 ensures a thorough mixing of the material to be treated and any reactive components such as enzymes.

The stirring piece(s) 17 can be fastened between two successive sections of the upright walls 15 either directly to the inner surface of the chamber 11, to the upright walls 15, or a combination of the two. The stirring piece(s) 17 can have the same length or be shorter than the width of the section in which it is placed. The stirring piece(s) 17 can be attached to one of the walls 15 or be placed in between two subsequent upright walls 15. If the stirring piece(s) 17 is attached to the upright walls 15, they can touch the inner surface of the chamber 11 or be elevated above it.

The stirring piece 17 can be in the shape of an upright wall i.e. a piece of material reaching into the central part of the chamber 11 e.g. placed perpendicular relative to the inner surface of the chamber i.e. in an angle of 90° in relation to the inner surface or be bended in any angle between 5° and 175°, normally between 45° and 135°.

Fig. 3 shows an embodiment of an upright stirring piece 17 having the shape of a Y. The "Y" is perpendicularly positioned relative to the inner surface of the chamber 11. Fig. 3A shows a view of a single stirring piece 17 seen from the end and fig. 3B shows a view of a single stirring piece 17 seen from the side. The Y-embodiment of fig. 3A and B is constructed of three parts: one fastening part 19 and two outer symmetric blades 18 which are mounted such that they mirror each other. The fastening part 19 is the connection between inner surface of the chamber 11 and the outer blades 18. The blades 18 and the fastening part 19 are joined to each other at positions 20 e.g. by welding or another suitable method depending on the material used for the stirring pieces. As the chamber 11 can rotate both clock wise and counter clockwise it is desirable that the stirring pieces 17 can lift the material in both directions.

Alternatively, the stirring piece(s) 17 can be in the shape of a V with either the bottom, i.e. the two ends, or the top directly attached to the inner surface of the chamber 11 and/or to the upright walls 15.

Generally, a chamber according to the invention, as defined in the appended claims, can be adapted to different processes, e.g. a chamber according to the invention can be used to subject material to e.g.
- pre-treatment which process might comprise heating and/or mechanically or chemically decomposition of the material, or
- cooling which process comprise removal of heat from the chamber, or
- chemical treatment which process might comprise the addition of a reactant such as enzymes, acid, base or a neutralizer.

Pre-treatment of the material before entering an enzymatic reaction chamber can e.g. comprise addition of acid to the material or addition of another substance causing decomposition of the material, and/or heating of the material and/or diminishing and/or mechanically softening of the material. If the material is pre-treated by heating, the pre-treated material may need to be cooled before enzymes are added in order to avoid destruction of the enzymes.

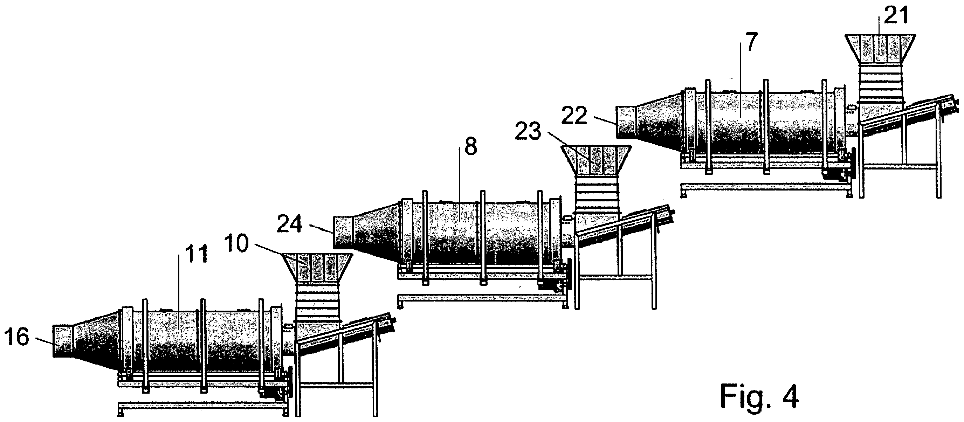

Fig. 4 shows a schematic illustration of the three step process of enzymatic treatment of material, with a first chamber 7 for pre-heating of the material, a second chamber 8 for cooling of the material and a third chamber 11 for enzymatic treatment of the material. The three chambers 7, 8 and 11 used respectively for pre-treatment of the material, cooling and enzymatic treatment are each similar to the chambers described in fig. 1A-E and fig. 2A-B. According to the invention it is also possible that two chambers according to the invention in which the material is subjected to respectively pre-treatment and a chemical reaction can be combined with e.g. a cooling unit of a completely different design, or that one chamber according to the invention in which the material is subjected to a chemical reaction can be combined with a pre-treatment unit or/and a cooling unit of a different design.

The first chamber 7 for pre-heating of the material comprises an inlet 21 for the solid and heterogeneous material and an outlet for pre-heated material 22. The first chamber 7 can comprise means for adding water or chemicals, e.g. water and/or chemicals might be added through the inlet 21 or through one or more additional inlets (not shown in the figure). The first chamber 7 is preferably equipped with a mantle or similar, which allows for easy control of the temperature inside the first chamber 7. Generally, if the chamber is used for a heat demanding process the chamber should be provided with means to heat the content of the chamber and e.g. insulating means in order to reduce to heat demand. Additionally, the first chamber 7 may be equipped with means for creating pressure inside the chamber. The inside of the first chamber 7 might be similar to the inside of the third chamber, i.e. the chamber 11 for enzymatic treatment of the material as illustrated in fig. 1 or 2, equipped with upright walls (not shown in the figure) forming a continuous spiral extending through the length of the first chamber 7 and with external means for rotating the chamber (not shown in the figure). In this way the material can be transferred to the second chamber 8 for cooling the material in a continuous manner.

The second chamber 8 for cooling of the material might according to this embodiment of the invention be similar to a chamber for enzymatic treatment described in fig. 1A-E or fig. 2A-B, but is not limited to these forms. This second chamber 8 has an inlet 23 for the pre-heated material and an outlet 24 for the cooled material. The second chamber 8 is equipped with a cooling mantle or similar, which allows for easy control of the temperature inside the second chamber 8. The mantel may be used as means for cooling and/or heating the pre-heated material to an appropriate temperature adequate for the subsequent enzymatic treatment, the temperature thus reflecting the enzymes utilized in the decomposition process. The second chamber 8 can comprise a continuous spiral extending through the length of the chamber with a large diameter through which cold air is blown, and with means for rotating the chamber (not shown in the figure). The material can thereby be transferred to the third chamber 11 for enzymatic treatment of the material in a continuous manner. The heat released during the cooling process may optionally be transferred back to the first chamber 7 for pre-heating of the material.

In the shown embodiment of the invention, as defined in the appended claims, three chambers are employed for the three different steps in the process. In another embodiment of the invention, as defined in the appended claims, the same chamber may be used for all three steps, thus making movement of the material from one chamber to another superfluous. In yet another embodiment of the invention, as defined in the appended claims, two of the subsequent steps may occur in the same chamber.

When the enzymatically treated material leaves the third chamber 11, the material will normally comprise two phases: a liquid and a solid phase which two phases are relatively easily separated. According to an embodiment of the invention, the enzymatically treated material consisting of the organic liquefied slurry and various solid phase non-organic objects, after exiting the chamber 11 will enter onto an at least partly perforated conveyor belt (not shown in the figure). The slurry will sieve through the perforations optionally with the help of water washing, mechanically vibrations of the conveyor or such, thereby efficiently separating the organic slurry from the non-organic solid objects.

A non-organic object like a plastic bottle or a metal canister might contain part of the organic slurry inside and an additional cleaning of the objects e.g. by washing might be required to completely separate the organic slurry from the non-organic fractions. The cleaned non-organic objects might be efficiently sorted after removal of all organic material and send to recycling. The metal can be removed by the use of e.g. magnets.

As normally only a relatively small amount of water is added to the pre-treatment and/or enzymatic treatment process, the organic slurry will have a high content of volatile matter, which can be used for a number of different purposes.

When the material has been treated in an apparatus of the present invention defined in the appended claims and according to the method defined in the appended claims of the present invention, the treated material - if the material fed to the process had a fraction which was not susceptible to enzymatic treatment - has turned into a mixture of a solid and a liquid fraction. This mixture will normally be subjected to a separation process in order to obtain optimal use of each fraction of the treated material.

The solid fraction will normally be separated into two groups of subject matter, a first group comprises materials which can be reused directly such metals and glass and a second group comprises materials which can not be directly re-used such as plastic, wood and textiles. Part of the plastic materials might be re-used after further sorting thereby recovering plastic products, otherwise this fraction of the material can be subjected to combustion in incinerators resulting in production of electricity and heat, gasification resulting in production syngas which again enables the production of electricity, heat and gasoline, pyrolysis resulting in production of electricity, heat, liquid fuels such as gasoline and diesel, or co-combustion in power plants resulting in production of electricity and heat.

The liquid fraction can e.g. be subjected to gasification resulting in syngas which again enables the production of gasoline, or fermentation resulting in e.g. ethanol, or wet-oxidation resulting in bio-oil such as heavy fuel for marine engines, or co-combustion in power plants resulting in electricity and heat, or biogas plants where biogas and sludge is formed.

### Example 1:

A portion of household waste comprising both organic contents, e.g. food product being both liquid and more solid and non-organic contents is decomposed into a mixture of an organic slurry and solid non-organic material in a three step process. In the first step the material is pre-treated in a separate chamber by heating the waste to a temperature between 50 - 100 °C, preferably 90 - 100 °C. Generally, the desired temperature depends on the distribution between the organic and non-organic content and the amount of solids compared to liquids in the organic content. The heating is combined with a thorough mixing of the waste, thus providing a preliminary physical breaking down and/or comminution of the material. As part of the waste is in the liquid phase, addition of water is not necessary. Whether it is necessary to add water depends on the amount of liquid originally present in the organic waste and also on how moist the organic waste is in general. The retention time for the pre-treatment of the waste normally varies between 15 min and 2 h.

After the pre-treatment the material is continuously transferred to the second step which takes place in a second chamber. In this step the material is cooled to a temperature of 30-65 °C before it is transferred to the third step which takes place in a third chamber.

In the third chamber the material is subjected to an enzymatic treatment. The temperature obtained after cooling should provide optimal conditions for the enzymes in the third chamber. The retention time in the third chamber is 5-48 h, during which the chamber is rotated both clock-wise and anti clock-wise and during which one or more types of enzymes are added in order to facilitate the breakdown of the different types of organic material found in the waste. The enzymes are liquefaction enzymes which are available to the public.

The three chambers used for the pre-treatment, the cooling and the enzymatic treatment of the household waste are similar in construction and resemble the chamber described in fig. 1, 2, and 4. Alternative embodiments may also be used, in particular for pre-treatment and cooling of the household waste.

After the organic material has been fully decomposed into slurry, the mixture of organic slurry and solid non-organic waste is transferred onto a partly perforated transportation table, where the majority of the slurry sieves through the perforations with the help of water washing and mechanically vibrations of the transportation table. Non-organic objects of plastic or metal like bottles or canisters are possible washed with the help of water in order to remove the rest of the organic slurry from the non-organic fractions. Organic and non-organic fractions of the waste are either re-used directly or send to further processing in order to use the energy stored in the fractions and possibly extract other usable fractions.

### Example 2:

A portion of agricultural waste, containing primarily straw is, decomposed in a three step process similar to the one described in Ex. 1.

In the first step the straw is pre-treated in a separate chamber which can operate under pressure by heating the material to a temperature between 150-200 °C. The heating is combined with an applied pressure and a thorough mixing of the straw, thus providing a preliminary physical breaking down of the material. Water is fed to this process step. The retention time for the pre-treatment of the waste is 2 h.

In the second step, the material is transferred continuously to a second chamber, where it is cooled to a temperature of 30-65°C before it is transferred to the third chamber where enzymatic treatment of the waste takes place.

The retention time in the third chamber is 5-48 h, during which the chamber is rotated both clock-wise and anti clock-wise and during which enzymes are added in order to facilitate the breakdown of the straw. After the straw has been fully decomposed into slurry, it is supplied to some kind of further processing in order to exploit energy stored in the slurry.

### Example 3

A portion of municipal solid waste is efficiently separated into liquefied parts and solid parts by a process where municipal solid waste is first introduced into a tubular horizontal rotating enzymatic reaction chamber as described above. The municipal solid waste can be pretreated and possibly also partly sorted prior to entering the chamber.

After entering the chamber, a predetermined amount of enzymes is added to the municipal solid waste at a point close to the inlet end of the reaction chamber. More enzymes can also be added at another point in the chamber. Along with the enzymes, an amount of water or another liquid can also be added.

The mixture of municipal waste and enzymes is afterwards transported along the reaction chamber, while it is mixed. The mixture is mixed in a plug flow like manner, which keeps the enzymes and the municipal solid waste together in the sections of the horizontal tubular reaction chamber by help of the helical walls arranged on the inside of the reaction chamber as shown in the figures.

The temperature and the pH value is controlled during process, thereby ensuring an optimal enzymatic hydrolyses of the biodegradable part of the municipal solid waste.

After the municipal waste has been enzymatically treated, the hydrolyzed slurry is separated from the solid parts of the municipal solid waste by sieves, washing arrangements and the likes. The slurry is subsequently further processed and/or stored elsewhere and likewise for the solid parts, which are possibly washed, sorted and/or dried. The solid parts can e.g. be used for recycling and/or as fuel products.

| Ref. nr | Title | Comments |
|---|---|---|
| 1 | Feeding device | |
| 2 | Chamber for treatment | |
| 3 | Hopper | Feeding device 1 |
| 4 | Transport room | Feeding device 1 |
| 5 | Pushing device | Feeding device 1 |
| 6 | Entrance part | |
| 7 | First chamber for pre-heating | Plant fig. 4 |
| 8 | Second chamber for cooling | Plant fig. 4 |
| 10 | Inlet | Enzymatic reaction chamber 2 |
| 11 | Chamber | Enzymatic reaction chamber 2 |
| 12 | Contact surface | Enzymatic reaction chamber 2 |
| 13 | Driving wheel | Enzymatic reaction chamber 2 |
| 14 | Gear arrangement | Enzymatic reaction chamber 2 |
| 15 | Upright walls | Enzymatic reaction chamber 2 |
| 16 | Outlet opening | Enzymatic reaction chamber 2 |
| 17 | Stirring pieces | Enzymatic reaction chamber 2 |
| 18 | Blade of stirring pieces | Enzymatic reaction chamber 2 |
| 19 | Fastening part for stirring pieces | Enzymatic reaction chamber 2 |
| 20 | Mounting pieces | Enzymatic reaction chamber 2 |
| 21 | Inlet | Chamber for pre-heating (fig. 4) |
| 22 | Outlet | Chamber for pre-heating (fig. 4) |
| 23 | Inlet | Chamber for cooling (fig. 4) |
| 24 | Outlet | Chamber for cooling (fig. 4) |

## Claims

1. A method for separation of municipal solid waste comprising in a continuous or semicontinuous way the actions of
1) introducing a predetermined and preferably pretreated amount of sorted or unsorted municipal solid waste into a tubular horizontal rotating enzymatic reaction chamber: said rotating reaction chamber comprising one or more upright helical walls; thereby forming separated sections (S₁ - Sₓ) along the lowest part of the inside of said chamber at all rotation angles,
2) adding to said amount of municipal solid waste a predetermined amount of reactant enzymes and optionally an amount of water or other liquid at at least one point close to the inlet end of the reaction chamber,
3) transporting and mixing while basically, in a plug flow like manner, keeping said predetermined amounts of reactant enzymes and municipal solid waste together in said sections of said horizontal tubular reaction chamber by help of said helical walls arranged on the inside of the rotating horizontal enzymatic reaction chamber
4) optionally keeping the temperature and/or pH value within the chamber/sections at predetermined levels in order to ensure optimal enzymatic hydrolyses of the biodegradable part of the municipal solid waste,
5) separating the hydrolyzed slurry from the solid parts of the municipal solid waste by help of sieves and/or washing arrangements,
6) transporting/pumping the slurry of the municipal solid waste for further processing or storing,
7) transporting said solid parts to further processing steps as washing, sorting and/or drying,
8) preparing the solid parts for storing/depositing and/or being used for recycling and/or fuel products.

2. The method of claim 1 wherein the process is conducted in a continuous manner.

3. The method of claim 1 wherein the municipal solid waste is household waste, such as sorted or unsorted household waste or other waste containing more than one reusable fraction.

4. The method of claim 1 wherein solid parts comprises metals, glass and plastic.

5. The method of claim 1 wherein separation is accomplished using sieves combined with mechanical vibration.

6. A method according to any of the claims 1 - 5, wherein the waste is subjected to further treatments such as: a) heating, b) cooling and/or c) pre-treatment.

7. A method according to any of the claims 1 - 6, wherein the reaction chamber during the enzymatic treatment of the waste is subjected to one or more rotation sequences comprising the following steps:
a) a first sequence of either clockwise or counter clockwise rotation lasting between 15 seconds - 5 minutes;
b) a second sequence of alternating of clockwise and counter clockwise rotation lasting between 0 seconds - 5 minutes where each sequence last between 0 min - 10 hours; and
a treatment in the enzymatic reaction chamber always starts and ends with a first sequence a) as material is transported forward inside the chamber during the first sequence.

8. A plant for enzymatic treatment of material having a certain content of organic material comprising:
a) a first chamber (7) for heating and/or mechanical treatment of the material;
b) a second chamber (8) for cooling of the material after step a);
c) a third chamber (11);
wherein said third chamber is a chamber for continuously enzymatic treatment of material having a certain content of organic material provided with means for continuously transporting the material and for rotating the chamber (11) along its substantially horizontal axis, **characterized in that** said chamber has an inlet (10) for the continuous flow of material to be treated and an outlet (16) for the continuous flow of treated material at opposite ends of the horizontal axis of the chamber (11), said means for transporting the material from the inlet (10) to the outlet (16) comprises one or more upright walls (15) attached to the inside of said chamber which one or more walls forms a spiral extending throughout the horizontal length of the chamber, wherein the one or more upright walls (15) of the third chamber (11) at all rotation angles form separated sections (S₁ - Sₓ) along the lowest part of the inside of said chamber (11) so that the upright walls (15) continuously moves said material in a horizontal direction upon rotating the cylinder.

9. A plant according to claim 8, wherein rotating means (12) are configured for providing rotation of the third chamber (11) in a clockwise and in a counter-clockwise direction.

10. A plant according to any claim 8 or 9, wherein the third chamber is provided with means for heating of the chamber; preferably as combined with means for maintaining the temperature inside the chamber.

11. A plant according to any of the claims 8 - 10, wherein the third chamber is provided with means for cooling of said chamber, preferably as irrigation of part of said chamber, or placing of part of the outer surface of said chamber in a water bath and e.g. an outlet for removing heated air from said chamber.

12. A plant according to any of the claims 8 - 11, wherein the third chamber is provided with means for controlling the retention time in form of a control system controlling speed and direction of the rotation of said chamber.

13. A plant according to any of the claim 8 - 12, wherein said plant is configured for continuously transferring the material to be treated from the first chamber (7) to the second chamber (8) to the third chamber (11).

14. A chamber for continuously enzymatic treatment of a material having a certain content of organic material, wherein said chamber is as defined in respect of the third chamber (11) in any of the claims 8 - 12.

## Patentansprüche

1. Verfahren zum Trennen kommunaler Feststoffabfälle, das in einer kontinuierlichen oder halbkontinuierlichen Weise die folgenden Vorgänge umfasst:
1) Einbringen einer vorher festgelegten und vorzugsweise vorbehandelten Menge sortierter oder unsortierter kommunaler Feststoffabfälle in eine rohrförmige horizontale sich drehende enzymatische Reaktionskammer: wobei die sich drehende Reaktionskammer eine oder mehrere aufrechte spiralförmige Wände umfasst; wodurch in allen Drehwinkeln getrennte Abschnitte (S₁-Sₓ) entlang des untersten Teils des Inneren der Kammer gebildet werden,
2) Hinzufügen einer vorher festgelegten Menge an Reaktantenzymen und optional einer Menge an Wasser oder einer anderen Flüssigkeit zur Menge an kommunalen Feststoffabfällen an zumindest einem Punkt nahe dem Einlassende der Reaktionskammer,
3) Transportieren und Vermischen, während die vorher festgelegten Mengen an Reaktantenzymen und kommunalen Feststoffabfällen im Wesentlichen in einer pfropfenströmungsähnlichen Weise mithilfe der im Inneren der sich drehenden horizontalen enzymatischen Reaktionskammer angeordneten spiralförmigen Wände in den Abschnitten der horizontalen rohrförmigen Reaktionskammer zusammengehalten werden,
4) optionales Halten der Temperatur und/oder des pH-Werts in der Kammer/den Abschnitten bei vorher festgelegten Niveaus, um optimale enzymatische Hydrolysen des biologisch abbaubaren Teils der kommunalen Feststoffabfälle zu gewährleisten,
5) Trennen der hydrolisierten Aufschlämmung von den festen Teilen der kommunalen Feststoffabfälle mithilfe von Sieben und/oder Wascheinrichtungen,
6) Transportieren/Pumpen der Aufschlämmung der kommunalen Feststoffabfälle zur weiteren Verarbeitung oder Lagerung,
7) Transportieren der festen Teile zu weiteren Verarbeitungsschritten wie Waschen, Sortieren und/oder Trocknen,
8) Vorbereiten der festen Teile zur Lagerung/Deponierung und/oder Verwendung für Recycling und/oder Kraftstoffprodukte.

2. Verfahren nach Anspruch 1, wobei der Prozess in einer kontinuierlichen Weise durchgeführt wird.

3. Verfahren nach Anspruch 1, wobei es sich bei den kommunalen Feststoffabfällen um Hausmüll, wie etwa sortierten oder unsortierten Hausmüll oder anderen Müll, der mehr als einen wiederverwendbaren Anteil enthält, handelt.

4. Verfahren nach Anspruch 1, wobei die festen Teile Metalle, Glas und Kunststoff umfassen.

5. Verfahren nach Anspruch 1, wodurch das Trennen unter Verwendung von Sieben in Kombination mit mechanischem Rütteln erzielt wird.

6. Verfahren nach einem der Ansprüche 1-5, wobei die Abfälle weiteren Behandlungen wie etwa den folgenden unterzogen werden: a) Erhitzen, b) Abkühlen und/oder c) Vorbehandlung.

7. Verfahren nach einem der Ansprüche 1-6, wobei die Reaktionskammer während der enzymatischen Behandlung der Abfälle einer oder mehreren Drehsequenzen unterzogen wird, welche die folgenden Schritte umfassen:
a) eine erste Sequenz von Drehung entweder im oder gegen den Uhrzeigersinn, die 15 Sekunden bis 5 Minuten andauert;
b) eine zweite Sequenz abwechselnder Drehung im und gegen den Uhrzeigersinn, die 0 Sekunden bis 5 Minuten andauert, wobei jede Sequenz 0 Minuten bis 10 Stunden andauert; und
wobei eine Behandlung in der enzymatischen Reaktionskammer stets mit einer ersten Sequenz a) startet und endet, während Material während der ersten Sequenz innerhalb der Kammer nach vorne transportiert wird.

8. Anlage zur enzymatischen Behandlung von Material, das einen gewissen Anteil an organischem Material aufweist, wobei die Anlage Folgendes umfasst:
a) eine erste Kammer (7) zum Erhitzen und/oder zur mechanischen Behandlung des Materials;
b) eine zweite Kammer (8) zum Abkühlen des Materials nach Schritt a);
c) eine dritte Kammer (11);
wobei die dritte Kammer eine Kammer zur kontinuierlichen enzymatischen Behandlung von Material ist, das einen gewissen Anteil an organischem Material aufweist, die mit Einrichtungen zum kontinuierlichen Transportieren des Materials und zum Drehen der Kammer (11) entlang ihrer im Wesentlichen horizontalen Achse bereitgestellt ist, **dadurch gekennzeichnet, dass** die Kammer einen Einlass (10) für den kontinuierlichen Strom von zu behandelndem Material und einen Auslass (16) für den kontinuierlichen Strom von behandeltem Material an entgegengesetzten Enden der horizontalen Achse der Kammer (11) aufweist, wobei die Einrichtung zum Transportieren des Materials vom Einlass (10) zum Auslass (16) eine oder mehrere aufrechte Wände (15) umfasst, die an der Innenseite der Kammer angebracht sind, wobei die eine oder die mehreren Wände eine Spirale bilden, die sich über die gesamte horizontale Länge der Kammer hinweg erstreckt, wobei die eine oder die mehreren aufrechten Wände (15) der dritten Kammer (11) in allen Drehwinkeln getrennte Abschnitte (S₁-Sₓ) entlang des untersten Teils des Inneren der Kammer (11) bilden, sodass die aufrechten Wände (15) das Material bei Drehung des Zylinders kontinuierlich in eine horizontale Richtung bewegen.

9. Anlage nach Anspruch 8, wobei Dreheinrichtungen (12) dazu konfiguriert sind, eine Drehung der dritten Kammer (11) im oder gegen den Uhrzeigersinn bereitzustellen.

10. Anlage nach Anspruch 8 oder 9, wobei die dritte Kammer mit einer Einrichtung zum Erhitzen der Kammer bereitgestellt ist; vorzugsweise in Kombination mit einer Einrichtung zum Aufrechterhalten der Temperatur innerhalb der Kammer.

11. Anlage nach einem der Ansprüche 8-10, wobei die dritte Kammer mit einer Einrichtung zum Abkühlen der Kammer bereitgestellt ist, vorzugsweise zum Spülen eines Teils der Kammer oder Platzieren eines Teils der Außenfläche der Kammer in einem Wasserbad und z. B. einem Auslass zum Entfernen erhitzter Luft aus der Kammer.

12. Anlage nach einem der Ansprüche 8-11, wobei die dritte Kammer mit einer Einrichtung zum Steuern der Verweilzeit in Form eines Steuersystems, das die Drehzahl und die Drehrichtung der Kammer steuert, bereitgestellt ist.

13. Anlage nach einem der Ansprüche 8-12, wobei die Anlage dazu konfiguriert ist, das zu behandelnde Material kontinuierlich von der ersten Kammer (7) an die zweite Kammer (8) an die dritte Kammer (11) zu übertragen.

14. Kammer zur kontinuierlichen enzymatischen Behandlung eines Materials, das einen gewissen Anteil an organischem Material aufweist, wobei die Kammer so wie in Bezug auf die dritte Kammer (11) in einem der Ansprüche 8-12 definiert ist.

## Revendications

1. Procédé de séparation de déchets solides municipaux, comprenant de manière continue ou semi-continue les actions consistant à
1) introduire une quantité prédéterminée et de préférence prétraitée de déchets solides municipaux triés ou non triés dans une chambre de réaction enzymatique rotative tubulaire horizontale ; ladite chambre de réaction rotative comprenant une ou plusieurs parois hélicoïdales verticales ; formant ainsi des sections distinctes (S₁-Sₓ) le long de la partie la plus basse de l'intérieur de ladite chambre dans tous les angles de rotation,
2) ajouter à ladite quantité de déchets solides municipaux une quantité prédéterminée d'enzymes réactives et facultativement une quantité d'eau ou d'un autre liquide au niveau au moins d'un point proche de l'extrémité d'entrée de la chambre de réaction,
3) transporter et mélanger tout en conservant fondamentalement, de manière similaire à l'écoulement en piston, lesdites quantités prédéterminées d'enzymes actives et de déchets solides municipaux ensemble dans lesdites sections de ladite chambre de réaction tubulaire horizontale à l'aide desdites parois hélicoïdales agencées à l'intérieur de la chambre de réaction enzymatique rotative horizontale
4) facultativement, maintenir la température et/ou la valeur du pH à l'intérieur de la chambre/des sections à des niveaux prédéterminés afin de garantir des hydrolyses enzymatiques optimales de la partie biodégradable des déchets solides municipaux,
5) séparer la boue hydrolysée des parties solides des déchets solides municipaux au moyen de dispositifs de tamis et/ou de lavage,
6) transporter/pomper la boue des déchets solides municipaux pour un nouveau traitement ou stockage,
7) transporter lesdites parties solides pour de nouvelles étapes de traitement telles que le lavage, le triage et/ou le séchage,
8) préparer les parties solides pour le stockage/entreposage et/ou pour être utilisées dans des produits de recyclage et/ou combustibles.

2. Procédé selon la revendication 1, dans lequel le processus est réalisé de manière continue.

3. Procédé selon la revendication 1, dans lequel les déchets solides municipaux sont des déchets ménagers, tel que des déchets domestiques triés ou non triés ou d'autres déchets contenant plus d'une fraction réutilisable.

4. Procédé selon la revendication 1, dans lequel des parties solides comprennent des métaux, du verre et du plastique.

5. Procédé selon la revendication 1, dans lequel la séparation est réalisée à l'aide de tamis combinés à une vibration mécanique.

6. Procédé selon l'une quelconque des revendications 1 à 5, dans lequel les déchets sont soumis à d'autres traitements tels que : a) le chauffage, b) le refroidissement et/ou c) le prétraitement.

7. Procédé selon l'une quelconque des revendications 1 à 6, dans lequel la chambre de réaction, au cours du traitement enzymatique des déchets, est soumise à une ou plusieurs séquences de rotation comprenant les étapes suivantes :
a) une première séquence de rotation soit dans le sens des aiguilles d'une montre soit dans le sens inverse des aiguilles d'une montre, durant de 15 secondes à 5 minutes ;
b) une seconde séquence de rotation alternant entre le sens des aiguilles d'une montre et le sens inverse des aiguilles d'une montre, durant de 0 seconde à 5 minutes, chaque séquence durant entre 0 minute et 10 heures ; et
un traitement dans la chambre de réaction enzymatique démarre et finit toujours par une première séquence a) tandis que le matériau avance dans la chambre au cours de la première séquence.

8. Centrale de traitement enzymatique de matériau possédant une certaine teneur en matière organique comprenant :
a) une première chambre (7) pour le chauffage et/ou le traitement mécanique du matériau ;
b) une seconde chambre (8) pour le refroidissement du matériau après l'étape a) ;
c) une troisième chambre (11) ;
dans laquelle ladite troisième chambre est une chambre destinée au traitement enzymatique continu de matériau possédant une certaine teneur en matière organique et équipée d'un moyen de transport continu du matériau et d'un moyen pour faire tourner la chambre (11) le long de son axe sensiblement horizontal, **caractérisée en ce que** ladite chambre possède une entrée (10) pour l'écoulement continu du matériau à traiter et une sortie (16) pour l'écoulement continu du matériau traité au niveau des extrémités opposées de l'axe horizontal de la chambre (11), ledit moyen de transport du matériau de l'entrée (10) vers la sortie (16) comprend une ou plusieurs parois verticales (15) fixées à l'intérieur de ladite chambre, lesquelles une ou plusieurs parois forment une spirale s'étendant à travers la longueur horizontale de la chambre, les une ou plusieurs parois verticales (15) de la troisième chambre (11) formant, dans tous les angles de rotation, des sections distinctes (S₁ - Sₓ) le long de la partie la plus basse de l'intérieur de ladite chambre (11) de sorte que les parois verticales (15) déplacent continuellement ledit matériau dans une direction horizontale lors de la rotation du cylindre.

9. Centrale selon la revendication 8, dans laquelle le moyen de rotation (12) est conçu pour fournir une rotation de la troisième chambre (11) dans le sens des aiguilles d'une montre ou dans le sens inverse des aiguilles d'une montre.

10. Centrale selon une quelconque revendication 8 ou 9, dans laquelle la troisième chambre est équipée d'un moyen pour chauffer la chambre ; de préférence en combinaison avec un moyen pour maintenir la température à l'intérieur de la chambre.

11. Centrale selon l'une quelconque des revendications 8 à 10, dans laquelle la troisième chambre est équipée d'un moyen pour refroidir ladite chambre, de préférence sous la forme d'une irrigation d'une partie de ladite chambre ou de placement d'une partie de la surface extérieure de ladite chambre dans un bain d'eau et p. ex. une sortie pour évacuer l'air chauffé de ladite chambre.

12. Centrale selon l'une quelconque des revendications 8 à 11, dans laquelle la troisième chambre est équipée d'un moyen de commande de la durée de rétention sous la forme d'un système de commande commandant la vitesse et la direction de la rotation de ladite chambre.

13. Centrale selon l'une quelconque des revendications 8 à 12, dans laquelle ladite centrale est conçue pour transférer en continu le matériau à traiter de la première chambre (7) à la deuxième chambre (8) puis à la troisième chambre (11).

14. Chambre de traitement enzymatique continu d'un matériau possédant une certaine teneur en matière organique, dans laquelle ladite chambre est comme définie par rapport à la troisième chambre (11) selon l'une quelconque des revendications 8 à 12.
